# EUROPÄISCHE PATENTANMELDUNG

(11) **EP 4 554 052 A1**
(43) Veröffentlichungstag der Anmeldung: **14.05.2025**
(21) Anmeldenummer: 24208106.5
(22) Anmeldetag: 22.10.2024
(51) Int. Cl.: H02K 1/20, H02K 15/02, H02K 15/0273

(54) **VERFAHREN ZUR HERSTELLUNG EINES STATORKERNS MIT KÜHLKANÄLEN**

(30) Priorität: 09.11.2023 DE 102023131105
(71) Anmelder: MAN Truck & Bus SE, 80995 München (DE)
(72) Erfinder: Weiss, Volodymyr, 80995 München (DE); Gläser, Maximilian, 80995 München (DE); Wetzel, Stefan, 80995 München (DE); Weber, Maximilian, 80995 München (DE)

(57) **Zusammenfassung**

Die Erfindung betrifft ein Verfahren zur Herstellung eines Statorkerns (30) für eine elektrische Maschine. Das Verfahren dabei ein Bereitstellen mehrerer baugleicher Statorbleche (10) auf, die jeweils ein Rotor-Durchgangsloch (12) und mehrere Kühl-Durchgangslöcher (14a, 14b, 14c) aufweisen. Zumindest zwei der Kühl-Durchgangslöcher (14a, 14b, 14c) jedes Statorblechs (10) sind hierbei unterschiedlich ausgebildet. Das Verfahren umfasst ferner ein Stapeln der Statorbleche (10) entlang einer Mittelachse (A) zu einem Statorblechpaket (20), wobei die gestapelten Rotor-Durchgangslöcher (12) einen Aufnahmeraum (22) für einen Rotor der elektrischen Maschine und die gestapelten Kühl-Durchgangslöcher (14a, 14b, 14c) mehrere Kühlkanäle (24) in dem Statorblechpaket (20) bilden. Ferner weist das Verfahren ein Fixieren des gestapelten Statorblechpakets (20) zur Ausbildung des Statorkerns (30) auf. Die Erfindung betrifft ferner einen entsprechenden Statorkern (30), eine elektrische Maschine und ein Kraftfahrzeug mit einem ebensolchen Statorkern (30) sowie ein Statorblech (10) zur Verwendung bei der Herstellung des Statorkerns (30).

## Beschreibung

Die Erfindung betrifft ein Verfahren zur Herstellung eines Statorkerns für eine elektrische Maschine sowie einen entsprechenden Statorkern. Ferner betrifft die Erfindung eine elektrische Maschine und ein Kraftfahrzeug mit einem ebensolchen Statorkern sowie ein Statorblech zur Verwendung bei der Herstellung des Statorkerns.

Im Stand der Technik sind rotierende elektrische Maschinen, welche elektrische Energie in Bewegungsenergie oder umgekehrt wandeln, grundsätzlich bekannt. Derartige elektrische Maschinen umfassen oftmals einen drehbaren Rotor, der von einem unbeweglichen Stator umgeben wird.

Der Stator, auch Ständer genannt, weist in der Regel einen Statorkern aus geschichteten, untereinander isolierten Einzelblechen mit Nuten auf, in welche eine Statorwicklung aufgenommen ist. Durch Anlegen eines elektrischen Drehstromfeldes an die Statorwicklung kann in einem elektromotorischen Betrieb bspw. ein elektromagnetisches Drehfeld erzeugt werden, welches ein Drehmoment auf den Rotor aufprägt und diesen dadurch in Bewegung versetzt.

Um im Betrieb einem resistiven Erwärmen der Statorwicklung bzw. des Stators entgegenzuwirken, ist es ferner im Stand der Technik bekannt, Kühlkanäle in den Statorkern zu integrieren, über welche Wärme an die Umgebungsluft oder ein Kühlmittel abgeben werden kann.

Die bisherigen Ansätze haben hierbei allerdings oftmals den Nachteil, dass keine ausreichende bzw. zufriedenstellende Kühlung des Stators erzielt werden kann. Zudem sind die bekannten Statorkühlungen oftmals schwierig zu fertigen.

Aufgabe der Erfindung ist es, eine verbesserte Lösung zum Kühlen eines Stators bereitzustellen, mittels derer vorzugsweise die Nachteile der bisherigen Lösungen vermieden werden können. Bevorzugt ist es eine Aufgabe der Erfindung, eine einfach herzustellende Lösung bereitzustellen, mittels derer eine effektive Statorkühlung mit vorzugsweise geringen Druckverlusten realisiert werden kann.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt der vorliegenden Offenbarung wird ein Verfahren zur Herstellung eines Statorkerns für eine (z. B. rotierende) elektrische Maschine (z. B. für einen Fahrzeugelektromotor) bereitgestellt.

Das Verfahren weist ein Bereitstellen mehrerer baugleicher (z. B. ringförmiger) Statorbleche (z. B. aus Elektroband) auf. Bevorzugt handelt es sich bei allen der mehreren Statorbleche somit um Gleichteile. Die mehreren baugleichen Statorbleche weisen bevorzugt einen (z. B. ringförmigen und/oder umfangsseitig geschlossenen) Grundkörper auf. Die mehreren baugleichen Statorbleche und/oder deren jeweilige Grundkörper weisen jeweils ein (z. B. zentrales) Rotor-Durchgangsloch (z. B. in der Mitte des Grundkörpers) und mehrere, vorzugsweise konzentrisch und/oder ringförmig um das Rotor-Durchgangsloch herum angeordnete, Kühl-Durchgangslöcher auf. Bevorzugt sind die Kühl-Durchgangslöcher dabei jeweils (z. B. deutlich) kleiner als das Rotor-Durchgangsloch ausgebildet.

Das Verfahren weist weiterhin ein (z. B. fluchtendes) Stapeln der mehreren baugleichen Statorbleche entlang einer Mittelachse zu einem Satorblechpaket auf, bevorzugt derart, dass die jeweiligen Mittelpunkte der Rotor-Durchgangslöcher alle (z. B. fluchtend) auf der Mittelachse liegen. Die gestapelten Rotor-Durchgangslöcher bilden dabei einen (z. B. zylinderförmigen und/oder umfangsseitig geschlossenen) Aufnahmeraum für einen (z. B. drehbar gelagerten) Rotor der elektrischen Maschine in dem Satorblechpaket. Zudem oder alternativ bilden die gestapelten Kühl-Durchgangslöcher mehrere (z. B. konzentrisch und/oder ringförmig um den Aufnahmeraum für den Rotor herum angeordnete) Kühlkanäle in dem Satorblechpaket. Bevorzugt sind die Kühlkanäle jeweils fluiddicht (z. B. öldicht) ausgebildet und/oder von einem (z. B. gasförmigen und/oder flüssigen) Kühlmittel durchströmbar.

Das Verfahren weist ferner ein Fixieren des gestapelten Statorblechpakets zur Ausbildung des Statorkerns auf. Dies kann bspw. durch mittels zumindest eines (z. B. stabförmigen) Halteelements (z. B. Spannbolzens) erfolgen. Zudem oder alternativ kann das Fixieren auch ein Verschweißen, Verschrauben, Verkleben, Verpressen und/oder Verbacken des gestapelten Statorblechpakets umfassen.

Das Verfahren sieht vor, dass zumindest zwei, vorzugsweise zumindest drei, der mehreren Kühl-Durchgangslöcher jedes der mehreren baugleichen Statorbleche unterschiedlich ausgebildet sind, vorzugsweise jeweils (z. B. aus derselben Blickrichtung, insbesondere entlang der Mittelachse, betrachtet) unterschiedliche Lochquerschnitte aufweisen (z. B. in einer Ebene senkrecht zur Mittelachse und/oder senkrecht zu einer jeweiligen Locherstreckungsrichtung). Lediglich beispielhaft kann jedes der Statorbleche zumindest ein erstes Kühl-Durchgangsloch mit einem ersten Lochquerschnitt und/oder zumindest ein zweites Kühl-Durchgangsloch mit einem zweiten Lochquerschnitt und/oder zumindest ein drittes Kühl-Durchgangsloch mit einem dritten Lochquerschnitt aufweisen, wobei die jeweiligen Lochquerschnitte bevorzugt jeweils unterschiedlich voneinander ausgebildet sind (z. B. eine unterschiedliche Form und/oder Größe aufweisen).

Wie im Folgenden noch eingehender beschrieben wird, ermöglicht das Verwenden von Gleichteilen mit unterschiedlichen Kühl-Durchgangslöchern zum einen auf vorteilhafte Weise ein einfaches und kostengünstiges Fertigen des Statorkerns. Zum anderen können durch teilweises Verdrehen der Statorbleche zueinander während des Stapelns auf einfache Weise Kühlkanäle mit variierendem Kühlkanalquerschnitt erzeugt werden. Diese zeichnen sich im Vergleich zu querschnittskonstanten Kühlkanälen durch verbesserte Wärmeabführeigenschaften aus.

Gemäß einem ersten Aspekt können die mehreren Kühl-Durchgangslöcher jedes der mehreren baugleichen Statorbleche zumindest ein symmetrisches (z. B. spiegelsymmetrisches) Kühl-Durchgangsloch aufweisen. Bevorzugt weist dieses einen achsensymmetrischen Lochquerschnitt auf. Beispielsweise kann das zumindest eine symmetrische Kühl-Durchgangsloch einen im Wesentlichen nierenförmigen und/oder in Form eines Rechtecks mit (z. B. mittig bzw. symmetrisch) eingebuchteter Längsseite ausgebildeten Lochquerschnitt aufweisen.

Zudem oder alternativ können die mehreren Kühl-Durchgangslöcher jedes der mehreren baugleichen Statorbleche zumindest ein asymmetrisches Kühl-Durchgangsloch aufweisen. Bevorzugt weist dieses einen nicht achsensymmetrischen Lochquerschnitt auf. Beispielsweise kann das zumindest eine asymmetrische Kühl-Durchgangsloch einen im Wesentlichen stiefelförmigen, z. B. in Form eines nach rechts gedrehten Stiefels ausgebildeten, Lochquerschnitt aufweisen.

Zudem oder alternativ können die mehreren Kühl-Durchgangslöcher jedes der mehreren baugleichen Statorbleche zumindest ein weiteres asymmetrisches Kühl-Durchgangsloch aufweisen. Bevorzugt weist dieses einen weiteren nicht achsensymmetrischen Lochquerschnitt auf. Besonders bevorzugt ist der Lochquerschnitt des zumindest einen weiteren asymmetrischen Kühl-Durchgangslochs dabei spiegelbildlich und/oder seitenverkehrt zum Lochquerschnitt des zumindest einen asymmetrischen Kühl-Durchgangslochs ausgebildet. Beispielsweise kann das zumindest eine weitere asymmetrische Kühl-Durchgangsloch einen im Wesentlichen stiefelförmigen, z. B. in Form eines nach links gedrehten Stiefels ausgebildeten, Lochquerschnitt aufweisen. Erfinderseitig wurde festgestellt, dass sich durch die vorstehenden Lochquerschnitte besonders vorteilhafte Kühlkanalgeometrien erzeugen lassen.

Nach einem weiteren Aspekt kann das zumindest eine symmetrische Kühl-Durchgangsloch (z. B. jedes Statorblechs) mehrere (z. B. zwanzig) symmetrische Kühl-Durchgangslöcher aufweisen. Diese sind bevorzugt (z. B. ausschließlich oder im Wesentlichen) in einem (z. B. ersten) 120°-Kreisringsegment um einen Mittelpunkt des jeweiligen Rotor-Durchgangslochs (z. B. des entsprechenden Statorblechs) angeordnet (z. B. gleichmäßig verteilt angeordnet). Beispielsweise können die mehreren symmetrischen Kühl-Durchgangslöcher (z. B. jedes Statorblechs) alle einen gleichen Abstand zum Mittelpunkt des jeweiligen Rotor-Durchgangslochs aufweisen und/oder in Umfangsrichtung regelmäßig innerhalb eines (z. B. ersten) Drittelkreisringsegments (z. B. um den Mittelpunkt des jeweiligen Rotor-Durchgangslochs) verteilt angeordnet sein.

Zudem oder alternativ kann auch das zumindest eine asymmetrisches Kühl-Durchgangsloch (z. B. jedes Statorblechs) mehrere (z. B. zwanzig) asymmetrische Kühl-Durchgangslöcher aufweisen. Diese sind bevorzugt (z. B. ausschließlich oder im Wesentlichen) in einem (z. B. zweiten) 120°-Kreisringsegment um den Mittelpunkt des jeweiligen Rotor-Durchgangslochs (z. B. des entsprechenden Statorblechs) angeordnet (z. B. gleichmäßig verteilt angeordnet). Beispielsweise können die mehreren asymmetrischen Kühl-Durchgangslöcher (z. B. jedes Statorblechs) alle einen gleichen Abstand zum Mittelpunkt des jeweiligen Rotor-Durchgangslochs aufweisen und/oder in Umfangsrichtung regelmäßig innerhalb eines (z. B. zweiten) Drittelkreisringsegments (z. B. um den Mittelpunkt des jeweiligen Rotor-Durchgangslochs) verteilt angeordnet sein.

Zudem oder alternativ kann auch das zumindest eine weitere asymmetrisches Kühl-Durchgangsloch (z. B. jedes Statorblechs) mehrere (z. B. zwanzig) weitere asymmetrische Kühl-Durchgangslöcher aufweisen. Diese sind bevorzugt (z. B. ausschließlich oder im Wesentlichen) in einem (z. B. dritten) 120°-Kreisringsegment um den Mittelpunkt des jeweiligen Rotor-Durchgangslochs (z. B. des entsprechenden Statorblechs) angeordnet (z. B. gleichmäßig verteilt angeordnet). Beispielsweise können die mehreren weiteren asymmetrischen Kühl-Durchgangslöcher (z. B. jedes Statorblechs) alle einen gleichen Abstand zum Mittelpunkt des jeweiligen Rotor-Durchgangslochs aufweisen und/oder in Umfangsrichtung regelmäßig innerhalb eines (z. B. dritten) Drittelkreisringsegments (z. B. um den Mittelpunkt des jeweiligen Rotor-Durchgangslochs) verteilt angeordnet sein. Wie im Folgenden noch beschrieben wird, ermöglicht die gedrittelte Aufteilung der Kühl-Durchgangslöcher auf vorteilhafte Weise, bspw. durch entsprechendes 120°-Verdrehen der Statorbleche während des Stapelns, unterschiedliche Lochquerschnitte aneinanderzufügen und damit entlang einer jeweiligen Erstreckungsrichtung der Kühlkanäle eine variierende Kühlkanalgeometrie zu erzeugen.

Gemäß einem weiteren Aspekt können die Kühl-Durchgangslöcher jedes der mehreren baugleichen Statorbleche alle jeweils einen konkav-fünfeckförmigen Lochquerschnitt (z. B. mit abgerundeten Ecken) aufweisen. Bevorzugt unterscheiden sich allerdings die konkav-fünfeckförmigen Lochquerschnitte von zumindest zwei, vorzugsweise von zumindest drei, der Kühl-Durchgangslöcher jedes Statorblechs (z. B. in Form und/oder Größe). Erfinderseitig wurde festgestellt, dass sich diese Lochquerschnittsform insbesondere zur Erzeugung vorteilhafter Kühlkanalgeometrien eignet.

Nach einem weiteren Aspekt kann der Schritt des Stapelns ein gegeneinander Verdrehen von zumindest zwei der mehreren baugleichen Statorbleche (z. B. um einen Winkel von 120°) um die Mittelachse umfassen. Bevorzugt erfolgt dies derart, dass dadurch (z. B. ausschließlich) unterschiedlich ausgebildete Kühl-Durchgangslöcher (z. B. Kühl-Durchgangslöcher mit verschiedenen Lochquerschnitten) aneinandergrenzen und/oder die (z. B. durch die gestapelten Kühl-Durchgangslöcher gebildeten) mehreren Kühlkanäle jeweils entlang einer jeweiligen Erstreckungsrichtung parallel zur Mittelachse einen variierenden Kühlkanalquerschnitt (z. B. Strömungsquerschnitt) aufweisen. Beispielsweise kann während des Stapels ein an ein Stapelende bildendes End-Statorblech anzufügendes Statorblech (z. B. um 120°) verdreht an das End-Statorblech gefügt werden, sodass bspw. ein symmetrisches Kühl-Durchgangsloch dieses angefügten Statorblechs an ein asymmetrisches Kühl-Durchgangsloch des End-Statorblechs angrenzt. Auf vorteilhafte Weise können dadurch Kühlkanäle mit entlang ihrer jeweiligen Erstreckungsrichtung variierenden Kühlkanalgeometrien erzeugt werden, welche im Vergleich zu durchgängig konstanten Kanalgeometrien eine bessere Wärmeabfuhr ermöglichen.

Zudem oder alternativ kann der Schritt des Stapelns auch ein Aneinanderfügen von zumindest zwei der mehreren baugleichen Statorbleche umfassen derart, dass (z. B. ausschließlich) unterschiedlich ausgebildete Kühl-Durchgangslöcher (z. B. mit verschiedenen Lochquerschnitten) aneinandergrenzen. Bevorzugt weisen die mehrere Kühlkanäle so jeweils entlang einer jeweiligen Erstreckungsrichtung parallel zur Mittelachse einen variierenden Kühlkanalquerschnitt auf. Wie vorstehend erwähnt, kann beim Aneinanderfügen dazu bspw. ein Verdrehen eines oder mehrerer Statorbleche um die Mittelachse erfolgen. Zudem oder alternativ ist es grundsätzlich auch möglich, dass beim Aneinanderfügen ein anzufügendes Statorblech bzgl. seiner Haupterstreckungsebene gewendet (z. B. umgedreht) wird, bspw. um so ein Aneinandergrenzen unterschiedlich ausgebildeter Kühl-Durchgangslöcher zu realisieren. Auch auf diese Art können auf vorteilhafte Weise variierende Kühlkanalgeometrien erzeugt werden.

Gemäß einem weiteren Aspekt kann der Schritt des Stapelns ein Gruppieren der mehreren baugleichen Statorbleche in mehrere Teilstapel aus jeweils gleich orientierten baugleichen Statorblechen umfassen. Beispielsweise können die mehrere Teilstapel alle jeweils eine gleiche (z. B. vorbestimmte) Anzahl von gleich orientierten Statorblechen aufweisen. Aufgrund der gleichen Orientierung der Statorbleche in einem Teilstapel können die jeweiligen Kühlkanäle innerhalb eines Teilstapels entlang ihrer jeweiligen Erstreckungsrichtung parallel zur Mittelachse vorzugsweise jeweils einen querschnittskonstanten Verlauf aufweisen.

Weiterhin kann der Schritt des Stapelns ein gegeneinander Verdrehen (z. B. aneinandergrenzender) Teilstapel (z. B. um einen Winkel von 120°) um die Mittelachse und/oder ein Aneinanderfügen der Teilstapel derart, dass (z.B. ausschließlich) unterschiedlich ausgebildete Kühl-Durchgangslöcher (z. B. mit verschiedenen Lochquerschnitten) aneinandergrenzen. Analog zum Fall einzelner Statorbleche kann auch so wiederum auf vorteilhafte Weise Kühlkanale mit entlang ihrer Erstreckungsrichtung variierendem Kühlkanalgeometrien erzeugt werden, wobei durch das Gruppieren bzw. Verwenden von Teilstapeln, die Periodizität bzw. die konkrete Form der Kühlkanalverläufe variiert werden kann.

Nach einem weiteren Aspekt können die mehreren baugleichen Statorbleche jeweils mehrere (z. B. gleichmäßig verteilte und/oder gleichmäßig voneinander beanstandete) Statorzähne aufweisen. Beispielsweise kann jeder der Statorzähne einen Zahnfuß, über den der jeweilige Statorzahn mit dem (z. B. ringförmige) Grundkörper des jeweiligen Statorblechs (z. B. integral-einstückig) verbunden sein kann, und einen (z. B. zum Zahnfuß entgegengesetzten und/oder entgegengesetzt orientierten) Zahnkopf aufweisen. Bevorzugt sind die jeweiligen Statorzähne (z. B. deren jeweiligen Zahnköpfe) dabei (z. B. alle) auf den Mittelpunkt des Rotor-Durchgangslochs und/oder radial nach innen ausgerichtet.

Zudem oder alternativ können die mehreren baugleichen Statorbleche jeweils mehrere (z. B. gleichmäßig verteilte und/oder gleichmäßig voneinander beanstandete) Statornuten zur Aufnahme einer Statorwicklung aufweisen. Bevorzugt sind die jeweiligen Statornuten jeweils zwischen zwei benachbarten Statorzähnen ausgebildet. Beispielsweise kann jede der Statornuten im Umfangsrichtung betrachtet sowohl nach links als auch rechts von einem Statorzahn begrenzt sein.

Gemäß einem weiteren Aspekt kann bei jedem der mehreren baugleichen Statorbleche jeweils eine Anzahl von Kühl-Durchgangslöchern gleich einer Anzahl von Statornuten sein. Beispielsweise kann jedes der mehreren baugleichen Statorbleche jeweils gleich viele Kühl-Durchgangslöcher wie Statornuten aufweisen. Bevorzugt ist dabei bei jedem der mehreren baugleichen Statorbleche jeweils eines der jeweiligen Kühl-Durchgangslöcher jeweils einem der jeweiligen Statornuten zugeordnet.

Zudem oder alternativ kann bei jedem der mehreren baugleichen Statorbleche jedes der Kühl-Durchgangslöcher jeweils radial nach außen versetzt und/oder radial fluchtend zu einer der jeweiligen Statornuten angeordnet sein. Beispielsweise können die Kühl-Durchgangslöcher somit jeweils einen größeren Abstand zum Mittelpunkt des Rotor-Durchgangslochs als die jeweiligen Statornuten aufweisen.

Zudem oder alternativ kann bei jedem der Statorbleche jedes der Kühl-Durchgangslöcher jeweils benachbart zu einem jeweiligen Nutgrund einer der jeweiligen Statornuten und/oder im Bereich eines jeweiligen Nutgrunds einer der jeweiligen Statornuten angeordnet sein. Insgesamt kann dadurch auf vorteilhafte Weise eine zuverlässige Wärmeabfuhr von einer in den Statornuten aufgenommenen Statorwicklung realisiert werden.

Nach einem weiteren Aspekt können die mehreren baugleichen Statorbleche (z. B. alle) jeweils im Wesentlichen ringförmig ausgebildet sein. Beispielsweise kann der Grundkörper als ein Ring-Grundkörper ausbildet sein.

Zudem oder alternativ können die mehreren baugleichen Statorbleche (z. B. alle) jeweils zumindest eine (z. B. radial nach außen gerichtete) Lasche zur Aufnahme zumindest eines (z. B. stiftförmigen) Halteelements aufweisen. Bevorzugt sind die jeweiligen Laschen geschlitzt und/oder zumindest abschnittsweise offen ausgebildet. Weiterhin können die gestapelten Laschen eine, vorzugsweise gerade, Durchgangsöffnung ausbilden, in die das zumindest eine Halteelement (z. B. in Form eines Spannbolzens) aufnehmbar ist. Auf vorteilhafte Weise kann hierüber eine sichere Fixierung des Statorblechpakets erreicht werden.

Zudem oder alternativ kann das Statorblechpaket und/oder der Statorkern ausschließlich baugleiche Statorbleche umfassen. Beispielsweise kann es sich bei den Statorblechen des Statorblechpakets und/oder des Statorkerns ausschließlich um Gleichteile handeln. Auf vorteilhafte Weise können dadurch die Herstellung vereinfacht und Herstellungskosten reduziert werden.

Zudem oder alternativ kann der Aufnahmeraum für den Rotor der elektrischen Maschine eine im Wesentlichen zylindrische Form aufweisen. Bevorzugt ist der Aufnahmeraum für den Rotor der elektrischen Maschine symmetrisch um die Mittelachse herum ausgebildet.

Gemäß einem weiteren Aspekt kann jeder der mehreren Kühlkanäle jeweils entlang einer jeweiligen Erstreckungsrichtung parallel zur Mittelachse einen variierenden Kühlkanalquerschnitt (z. B. in einer Ebene senkrecht zur Mittelachse) aufweisen. Beispielsweise kann sich bei jedem der mehreren Kühlkanäle sein Kühlkanalquerschnitt entlang der jeweiligen Erstreckungsrichtung parallel zur Mittelachse in seiner Form und/oder Größe (z. B. als Folge der Stapelung unterschiedlich ausgebildeter Kühl-Durchgangslöcher) verändern. Bevorzugt weisen die mehreren Kühlkanäle entlang ihrer jeweiligen Erstreckungsrichtung somit jeweils gerade keinen konstanten Kühlkanalquerschnitt auf. Auf vorteilhafte Weise kann dadurch das Durchströmungsverhalten bzw. der Wärmeabtransport positiv beeinflusst werden.

Zudem oder alternativ kann jeder der mehreren Kühlkanäle jeweils entlang einer jeweiligen Erstreckungsrichtung parallel zur Mittelachse jeweils mehrere (z. B. regelmäßige) Richtungsänderungen (z. B. Richtungswechsel), vorzugsweise in Radialrichtung und Umfangsrichtung, aufweisen. Beispielsweise kann jeder der mehreren Kühlkanäle entlang ihrer jeweiligen Erstreckungsrichtung jeweils mehrere Richtungsänderungen in Radialrichtung und/oder mehrere Richtungsänderungen in Umfangsrichtung aufweisen. Die Ausdrücke Radialrichtung und Umfangsrichtung können hierbei bspw. auf die Mittelachse des Statorblechpakets bzw. das Satorblechpaket selbst bezogen sein. Beispielsweise kann die Radialrichtung senkrecht zur Mittelachse und die Umfangsrichtung um die Mittelachse herum definiert sein. Auch dadurch kann auf vorteilhafte Weise das Durchströmungsverhalten bzw. der Wärmeabtransport positiv beeinflusst werden.

Zudem oder alternativ kann jeder der mehreren Kühlkanäle das Statorblechpaket vollständig durchdringen. Beispielsweise kann sich jeder der mehreren Kühlkanäle von einer (z. B. senkrecht zur Mittelachse orientierten) ersten Endfläche des Statorblechpakets zu einer (z. B. senkrecht zur Mittelachse orientierten) zweiten Endfläche des Statorblechpakets durchgängig (z. B. ohne Unterbrechung) durch das Statorblechpaket erstrecken.

Ein weiterer unabhängiger Aspekt der vorliegenden Offenbarung betrifft einen (z. B. hohlzylinderförmigen) Statorkern für eine (z. B. rotierende) elektrische Maschine (z. B. einen Fahrzeugelektromotor). Bevorzugt ist der Statorkern gemäß einem Verfahren, wie hierin beschrieben, hergestellt. Folglich sollen die hierin in Zusammenhang mit dem Verfahren beschriebenen Aspekte, bspw. die möglichen Ausführungen der Statorbleche, auch im Zusammenhang mit dem Statorkern offenbart und beanspruchbar sein. Entsprechendes soll auch umgekehrt gelten.

Der Statorkern weist ein (z. B. fixiertes) Statorblechpaket aus mehreren entlang einer Mittelachse gestapelten baugleichen Statorblechen auf. Bevorzugt sind die (z. B. gestapelten) Statorbleche des Statorblechpakets zumindest teilweise (z. B. um die Mittelachse herum) gegeneinander verdreht. Beispielsweise können manche der Statorbleche um ± 120° bezüglich eines Referenz-Statorblechs des Statorblechpakets verdreht sein. In einer Ausführungsform können die Statorbleche derart gestapelt sein, dass das zweite, fünfte, siebte etc. Statorblech um +120° und das dritte, sechste, neunte etc. Statorblech um -120° zum ersten Statorblech verdreht sind.

Das vorgenannte Statorblechpaket weist hierbei einen (z. B. zylinderförmigen und/oder umfangsseitig geschlossenen) Aufnahmeraum für einen (z. B. drehbar gelagerten) Rotor der elektrischen Maschine auf. Bevorzugt ist der Aufnahmeraum hierbei symmetrisch um die Mittelachse herum angeordnet. Zudem oder alterativ weist das Statorblechpaket mehrere (z. B. konzentrisch um den Aufnahmeraum für den Rotor herum angeordnete) Kühlkanäle (z. B. durch Durchströmung mit einem Kühlmittel) auf.

Hierbei ist vorgesehen, dass jeder der mehreren Kühlkanäle jeweils entlang einer jeweiligen Erstreckungsrichtung parallel zur Mittelachse einen variierenden (z. B. sich in seiner Form und/oder Größe verändernden) Kühlkanalquerschnitt (z. B. in einer Ebene senkrecht zur Mittelachse) und/oder mehrere Richtungsänderungen (z. B. in Radialrichtung und Umfangsrichtung) aufweist. Auf vorteilhafte Weise kann dadurch im Vergleich zu querschnittskonstanten Kühlkanälen eine verbesserte Wärmeabfuhr erreicht werden.

Nach einem Aspekt kann jeder der mehreren Kühlkanäle jeweils entlang der jeweiligen Erstreckungsrichtung parallel zur Mittelachse zumindest eine Richtungsänderung in Radialrichtung und/oder zumindest eine Richtungsänderung in Umfangsrichtung aufweisen. Beispielsweise kann sich jeder der mehreren Kühlkanäle entlang seiner jeweiligen Erstreckungsrichtung parallel zur Mittelachse abschnittsweise (z. B. bzgl. der Radialrichtung) radial nach außen und/oder radial nach innen verlagern. Zudem oder alternativ kann sich jeder der mehreren Kühlkanäle entlang der jeweiligen Erstreckungsrichtung parallel zur Mittelachse abschnittsweise (z. B. bzgl. der Umfangsrichtung) seitlich nach links und/oder seitlich nach rechts verlagern. Besonders bevorzugt weist jeder der mehreren Kühlkanäle entlang der jeweiligen Erstreckungsrichtung parallel zur Mittelachse eine periodische Abfolge aus Richtungsänderung in Radialrichtung und/oder Umfangsrichtung auf. Beispielsweise kann jeder der mehreren Kühlkanäle in Form einer eckigen Spiralwendel und/oder eckigen Schraubenlinie ausgebildet sein.

Zudem oder alternativ kann jeder der mehreren Kühlkanäle somit jeweils eine Turbinengeometrie aufweisen und/oder wie eine Turbine ausgebildet sein.

Zudem oder alternativ kann jeder der mehreren Kühlkanäle ausgebildet sein, einen jeweiligen Kühlmittelstrom (z. B. im Inneren des jeweiligen Kühlkanals) auf einem im Wesentlichen schraubenförmigen und/oder korkenzieherförmigen Strömungspfad (z. B. entlang des jeweiligen Kühlkanals) zu leiten. Beispielsweise kann innerhalb jedes der mehreren Kühlkanäle ein Strömungspfad in Form einer (z. B. eckigen) Schraubenlinie ausbildbar sein.

Zudem oder alternativ kann jeder der mehreren Kühlkanäle ausgebildet sein, einen jeweiligen Kühlmittelstrom auf einem entlang der jeweiligen Erstreckungsrichtung parallel zur Mittelachse zirkulierenden Strömungspfad zu leiten.

Zudem oder alternativ kann jeder der mehreren Kühlkanäle jeweils entlang der jeweiligen Erstreckungsrichtung parallel zur Mittelachse abschnittsweise einen achsensymmetrischen Kühlkanalquerschnitt und/oder abschnittsweise einen nicht achsensymmetrischen Kühlkanalquerschnitt aufweisen. Bevorzugt wechseln sich bei dem der mehreren Kühlkanäle Abschnitte mit achsensymmetrischem Kühlkanalquerschnitt und Abschnitte mit nicht achsensymmetrischen Kühlkanalquerschnitt periodisch ab.

Ein weiterer unabhängiger Aspekt der vorliegenden Offenbarung betrifft eine (z. B. rotierende) elektrische Maschine (z. B. ein Elektromotor) für ein Kraftfahrzeug (z. B. Nutzfahrzeug). Die elektrische Maschine weist einen Stator auf. Dieser wiederum weist einen Statorkern, wie hierin beschrieben, und eine Statorwicklung, die am Statorkern angebracht ist, auf. Folglich sollen die hierin in Zusammenhang mit dem Statorkern bzw. dessen Verfahren zur Herstellung beschriebenen Aspekte auch im Zusammenhang mit der elektrischen Maschine offenbart und beanspruchbar sein. Entsprechendes soll auch umgekehrt gelten. Weiterhin weist die elektrische Maschine einen Rotor auf, der bevorzugt im Aufnahmeraum des Statorkerns drehbar aufgenommen ist. Bevorzugt weist die elektrische Maschine ferner eine Kühlmittelversorgung auf, mittels derer den jeweiligen Kühlkanälen des Statorkerns Kühlmittel zuführbar ist. Beispielsweise kann die Kühlmittelversorgung eine Kühlmittelpumpe und/oder entsprechende Verbindungsleitungen aufweisen.

Ein weiterer unabhängiger Aspekt der vorliegenden Offenbarung betrifft ein Kraftfahrzeug (z. B. ein Hybrid- oder Elektrofahrzeug), aufweisend eine elektrische Maschine, wie hierin beschrieben, und/oder einen Statorkern, wie hierin beschrieben. Folglich sollen wiederum die im Zusammenhang mit der elektrischen Maschine, dem Statorkern und dessen Verfahren zur Herstellung beschriebenen Aspekte auch im Zusammenhang mit dem Kraftfahrzeug offenbart und beanspruchbar sein. Entsprechendes soll auch umgekehrt gelten. Bevorzugt ist das Kraftfahrzeug ein Nutzfahrzeug (z. B. ein Hybrid-Nutzfahrzeug oder Elektro-Nutzfahrzeug). Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug, ein Omnibus und/oder eine landwirtschaftliche Maschine (z. B. ein Traktor) sein.

Ein weiterer unabhängiger Aspekt der vorliegenden Offenbarung betrifft ein Statorblech (z. B. aus Elektroblech), vorzugsweise mit den Merkmalen wie hierin offenbart und/oder wie in einem der Ansprüchen 1-14 beschrieben. Besonders bevorzugt dient das Statorblech zur Verwendung in einem Verfahren, wie hierin beschrieben, und/oder als Bestandteil eines Statorkern, wie hierin beschrieben. Folglich sollen wiederum die im Zusammenhang mit dem Verfahren, dem Statorkern, der elektrischen Maschine und dem Kraftfahrzeug beschriebenen Aspekte, insbesondere Statorblechmerkmale, auch im Zusammenhang mit dem Statorblech selbst offenbart und beanspruchbar sein. Entsprechendes soll auch umgekehrt gelten.

Das Statorblech weist einen (z. B. ringförmigen) Grundkörper auf, der ein (z. B. zentrales und/oder mittig angeordnetes) Rotor-Durchgangsloch aufweist. Beispielsweise kann das Rotor-Durchgangsloch symmetrisch um einen Mittelpunkt M herum ausgebildet sein.

Weiterhin weist das Statorblech mehrere Statorzähne auf, die bevorzugt jeweils einen, mit dem Grundkörper (z.B. integral-einstückig) verbundenen Zahnfuß und einen, zum Zahnfuß entgegengesetzten Zahnkopf aufweisen. Die jeweiligen Zahnköpfe können jeweils auf den Mittelpunkt M des Rotor-Durchgangslochs ausgerichtet sein.

Ferner weist das Statorblech mehrere Statornuten (z. B. zur Aufnahme einer Statorwicklung) auf, wobei die Statornuten bevorzugt jeweils zwischen zwei benachbarten Statorzähnen ausgebildet sind.

Weiterhin weist das Statorblech mehrere (z. B. konzentrisch und/oder ringförmig um das Rotor-Durchgangsloch herum angeordnete) Kühl-Durchgangslöcher auf. Bevorzugt sind die Kühl-Durchgangslöcher dabei jeweils einer der Statornuten zugeordnet und/oder radial nach außen versetzt zu der bzw. einer jeweiligen Statornut angeordnet. Die Kühl-Durchgangslöcher weisen mehrere erste Kühl-Durchgangslöcher mit einem (z. B. achsensymmetrischen) ersten Lochquerschnitt, wobei vorzugsweise die mehreren ersten Kühl-Durchgangslöcher in einem ersten 120°-Kreisringsegment um den Mittelpunkt des Rotor-Durchgangslochs herum angeordnet sind. Weiterhin weisen die Kühl-Durchgangslöcher mehrere zweite Kühl-Durchgangslöcher mit einem (z. B. nicht achsensymmetrischen) zweiten Lochquerschnitt auf, wobei vorzugsweise die mehreren zweiten Kühl-Durchgangslöcher in einem zweiten 120°-Kreisringsegment um den Mittelpunkt des Rotor-Durchgangslochs angeordnet sind. Ferner weisen Kühl-Durchgangslöcher mehrere dritte Kühl-Durchgangslöcher mit einem (z. B. weitern nicht achsensymmetrischen) dritten Lochquerschnitt auf, wobei vorzugsweise die mehreren dritten Kühl-Durchgangslöcher in einem dritten 120°-Kreisringsegment um den Mittelpunkt des Rotor-Durchgangslochs angeordnet sind. Auf vorteilhafte Weise kann dadurch ein Statorblech bereitgestellt werden, welches sich in vielfacher Ausführung besonders zur Verwendung im Zusammenhang mit dem hierin beschriebenen Verfahren eignet.

Zweckmäßig soll sich die Angabe "unterschiedliche Lochquerschnitte" hierin bevorzugt auf eine Betrachtung der jeweiligen Lochquerschnitte aus derselben Blickrichtung, bspw. parallel zur Mittelachse, beziehen.

Weiterhin soll der Ausdruck "Erstreckungsrichtung" eines Kühlkanals bevorzugt dessen Richtung längster Erstreckung und/oder von dessen Anfang zu dessen Ende weisende Richtung bezeichnen.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen
- Figur 1:: ein schematisches Flussdiagramm eines Verfahrens zur Herstellung eines Statorkerns für eine elektrische Maschine gemäß einer Ausführungsform;
- Figur 2:: eine schematische Auf- und Seitenansicht eines Statorblechpakets aus mehreren gestapelten Statorblechen gemäß einer Ausführungsform;
- Figur 3:: eine schematische Darstellung eines Statorblechs gemäß einer Ausführungsform und vergrößerte Detailansichten des Statorblechs;
- Figur 4:: schematische Darstellungen unterschiedlich ausgebildete Lochquerschnitte gemäß verschiedenen Ausführungsformen;
- Figur 5:: eine schematische Darstellung eines Statorkerns gemäß einer Ausführungsform;
- Figuren 6A und 6B:: verschiedene Detaildarstellungen eines Ausschnitts eines Statorblechpakets gemäß einer Ausführungsform; und
- Figuren 7A und 7B:: verschiedene perspektivische Ansichten eines Kühlkanals gemäß einer Ausführungsform.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Ferner sind aus Gründen der Übersichtlichkeit nicht alle mehrfach vorkommenden Komponenten mit ihren entsprechenden Bezugszeichen versehen.

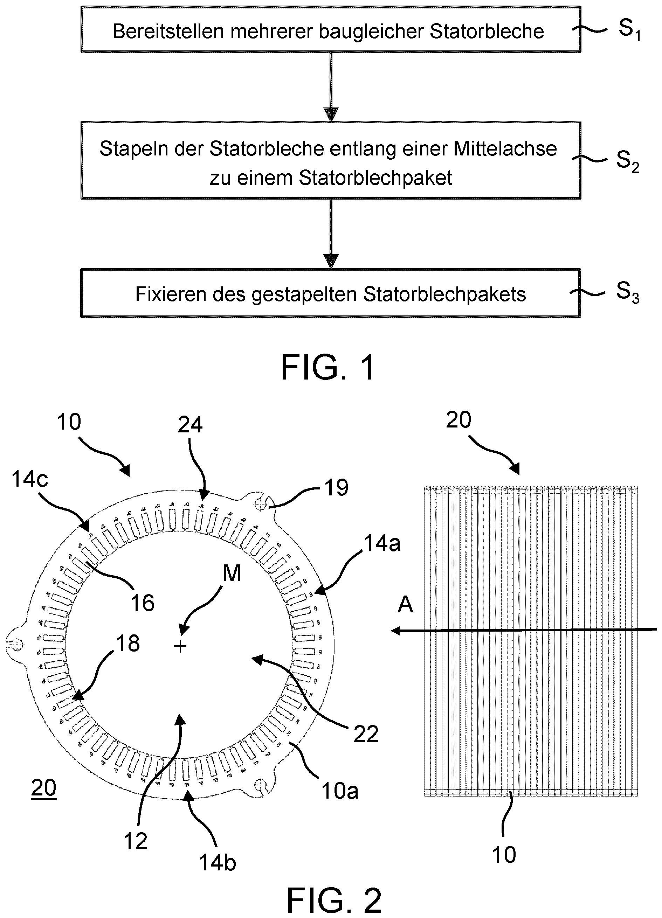

Figur 1 zeigt ein schematisches Flussdiagramm eines Verfahrens zur Herstellung eines Statorkerns 30 für eine elektrische Maschine (z. B. für einen Fahrzeugelektromotor). Der Statorkern 30 kann zusammen mit einer am Statorkern 30 angebrachten Statorwicklung (nicht dargestellt) Teil eines Stators der elektrischen Maschine (nicht dargestellt) sein. Durch Anlegen eines elektrischen Drehstromfeldes an die Statorwicklung kann durch die Statorwicklung und den Statorkern 30 ein elektromagnetisches Drehfeld erzeugt werden, welches auf einen (nicht dargestellten) magnetischen Rotor der elektrischen Maschine ein Drehmoment aufprägt und diesen dadurch in Bewegung versetzt.

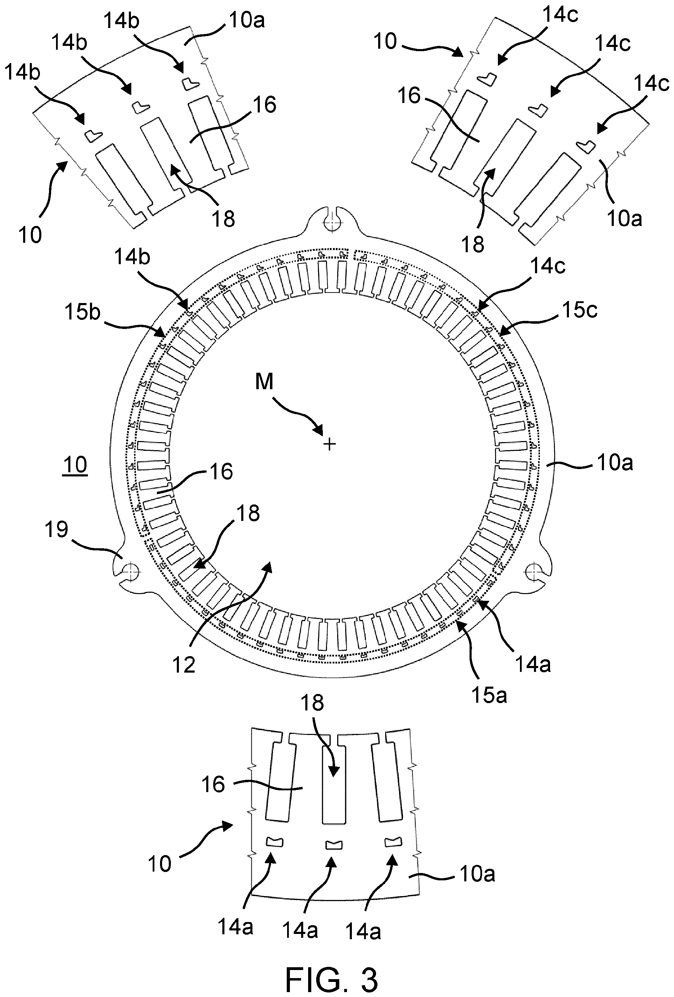

Im Schritt S₁ erfolgt dabei Bereitstellen mehrerer baugleicher Statorbleche 10, wovon eines in Figur 3 exemplarisch dargestellt ist. Bevorzugt handelt es sich bei den Statorblechen 10 um Gleichteile mit jeweils gleicher Abmessungen und aus dem gleichen Material. Folglich sind die folgenden Ausführungen jeweils immer bevorzugt auf jedes einzelne der bereitgestellten Statorbleche 10 bezogen.

So können die Statorbleche 10 können aus Elektroblech und/oder einer Eisen-Silizium-Legierung bestehen. Die Statorbleche 10 können eine Dicke zwischen 0,1 und 1 mm aufweisen. Die Statorbleche 10 können gestanzt und/oder geschnitten (z. B. lasergeschnitten) sein. Die Statorbleche 10 können zur Isolation und/oder zum Schutz vor Korrosion mit einem Isolierlack beschichtet sein.

Die Statorbleche 10 können einen Grundkörper 10a aufweisen (vgl. Figur 3). Der Grundkörper 10a kann bspw. ringförmigen (z. B. kreisringförmig) und/oder umfangseitig geschlossenen sein. Die Statorbleche 10 und/oder deren Grundkörper 10a können ein Rotor-Durchgangsloch 12 und mehrere Kühl-Durchgangslöcher 14a, 14b, 14c aufweisen (vgl. Figur 3). Die Statorbleche 10 und/oder deren Grundkörper 10a können jeweils einteilig ausgebildet sein.

Bevorzugt ist das Rotor-Durchgangsloch 12 mittig und/oder zentral angeordnet. Das Rotor-Durchgangsloch 12 kann im Wesentlichen kreisförmig ausgebildet sein. Das Rotor-Durchgangsloch 12 kann bspw. gestanzt, geschnitten (z. B. lasergeschnitten) und/oder gebohrt sein. Das Rotor-Durchgangsloch 12 kann einen Mittelpunkt M aufweisen und/oder symmetrisch um den Mittelpunkt M herum ausgebildet sein.

Die Kühl-Durchgangslöcher 14a, 14b, 14c können konzentrisch und/oder kreisringförmig um das Rotor-Durchgangsloch 12 herum angeordnet sein. Beispielsweise können alle Kühl-Durchgangslöcher 14a, 14b, 14c auf einem gedachten Kreis um den Mittelpunkt M liegen bzw. angeordnet sein. Entsprechend können die Kühl-Durchgangslöcher 14a, 14b, 14c alle einen gleichen (z. B. radialen) Abstand zum Mittelpunkt M und/oder zum Rotor-Durchgangsloch 12 aufweisen. Auch die Kühl-Durchgangslöcher 14a, 14b, 14c können bspw. gestanzt, geschnitten (z. B. lasergeschnitten) und/oder gebohrt sein.

Die Statorbleche 10 können ferner mehrere (z. B. sechzig) Statorzähne 16 aufweisen (vgl. Figur 3). Jeder der Statorzähne 16 kann einen Zahnfuß und einen Zahnkopf aufweisen, welche vorzugsweise über einen Zahnschaft miteinander verbunden sind. Der Zahnfuß und Zahnkopf eines Statorzahns 16 können entgegengesetzt zueinander orientiert und/oder angeordnet sein. Der Zahnschaft kann sich ausgehend vom Zahnfuß zum Zahnkopf verjüngen, wobei bevorzugt der Zahnkopf verbreitert ausgeführt ist.

Jeder der Statorzähne 16 kann über seinen Zahnfuß mit dem Grundkörper 10a (z. B. integral-einstückig) verbunden sein. Die Zahnschäfte und/oder Zahnköpfe können alle auf den Mittelpunkt M des Rotor-Durchgangslochs 12 ausgerichtet sein. Entsprechend können die Statorzähne 16 alle radial nach innen weisen und/oder radial nach vom Grundkörper 10a abragen. Bevorzugt sind die Statorzähne 16 in einer Umfangsrichtung des Statorblechs 10 bzw. des Grundkörper 10a äquidistant angeordnet. Beispielsweise können die Statorzähne 16 somit (z. B. in Umfangsrichtung) gleichmäßig verteilt angeordnet und/oder gleichmäßig voneinander beabstandet angeordnet sein.

Jedes der Statorbleche 10 kann ferner mehrere Statornuten 18 aufweisen (vgl. Figur 3). Die Statornuten 18 können dabei jeweils zwischen zwei benachbarten Statorzähne 16 angeordnet sein. Entsprechend können auch die Statornuten 18 in Umfangsrichtung äquidistant angeordnet und/oder gleichmäßig verteilt angeordnet sein. Die Statornuten 18 können zwei Nutflanken und einen Nutgrund aufweisen. Die Nutflanken können die jeweilige Statornuten 18 in Umfangsrichtung begrenzen, während der Nutgrund die jeweilige Statornuten 18 in radialer Richtung (z. B. radial nach außen) begrenzt. Die Statornuten 18 können zum Mittelpunkt M und/oder zum Rotor-Durchgangsloch 12 hin offen sein. Der Nutgrund kann jeweils entgegengesetzt zur jeweiligen Öffnung zum Rotor-Durchgangsloch 12 angeordnet sein.

Bevorzugt sind die Kühl-Durchgangslöcher 14a, 14b, 14c jeweils einem der Statornuten 18 zugeordnet. Beispielsweise kann an jeder der Statornuten 18 jeweils eines der Kühl-Durchgangslöcher 14a, 14b, 14c angeordnet sein. Entsprechend kann jedes Statorblech 10 eine gleiche Anzahl von Kühl-Durchgangslöchern 14a, 14b, 14c und Statornuten 18 aufweisen. Jedes der Kühl-Durchgangslöcher 14a, 14b, 14c kann dabei jeweils radial nach außen versetzt zu einer der Statornuten 18 angeordnet sein. Beispielsweise kann jedes der Kühl-Durchgangslöcher 14a, 14b, 14c jeweils fluchtend zu einem entsprechenden Nutgrund der Statornuten 18 radial nach außen versetzt zu einem angeordnet sein.

Wie in Figur 3 ersichtlich, kann jeder Statornut 18 jeweils ein Kühl-Durchgangsloch 14a, 14b, 14c zugeordnet sein, die Kühl-Durchgangslöcher 14a, 14b, 14c sind bevorzugt jedoch nicht alle gleich bzw. identisch ausgebildet. Vielmehr ist vorgehen, dass zumindest zwei, vorzugsweise zumindest drei, der Kühl-Durchgangslöcher 14a, 14b, 14c unterschiedlich ausgebildet sind. Vorliegend weisen die mehreren Kühl-Durchgangslöcher 14a, 14b, 14c dazu beispielhaft teilweise - aus derselben Blickrichtung betrachtet - unterschiedliche Lochquerschnitte auf.

Wie in den vergrößerten Detaildarstellungen in Figur 3 ersichtlich ist, weisen die mehreren Kühl-Durchgangslöcher 14a, 14b, 14c vorliegend beispielhaft zumindest ein erstes Kühl-Durchgangsloch 14a mit einem ersten Lochquerschnitt, zumindest ein zweites Kühl-Durchgangsloch 14b mit einem zweiten Lochquerschnitt und zumindest ein drittes Kühl-Durchgangsloch 14c mit einem dritten Lochquerschnitt auf.

Der erste Lochquerschnitt kann bspw. eine achsensymmetrische Form aufweisen (vgl. Detaildarstellung unten in Figur 3). Entsprechend kann das zumindest eine erste Kühl-Durchgangsloch 14a auch als symmetrisches Durchgangsloch bezeichnet werden. Beispielsweise kann der erste Lochquerschnitt nierenförmig und/oder wannenförmig sein und/oder in Form eines Rechtecks mit eingebuchteter Längsseite ausgebildet sein.

Der zweite Lochquerschnitt kann bspw. eine nicht achsensymmetrische Form aufweisen (vgl. Detaildarstellung oben links in Figur 3). Entsprechend kann das zumindest eine zweite Kühl-Durchgangsloch 14b auch als asymmetrisches Durchgangsloch bezeichnet werden. Beispielsweise kann der zweite Lochquerschnitt in Form eines nach rechts weisenden Stiefels und/oder in Form eines Rechtecks mit einer eingebuchteten Ecke ausgebildet sein.

Der dritte Lochquerschnitt kann bspw. ebenfalls eine nicht achsensymmetrische Form aufweisen (vgl. Detaildarstellung oben rechts in Figur 3). Entsprechend kann das zumindest eine dritte Kühl-Durchgangsloch 14c auch als weiteres asymmetrisches Durchgangsloch bezeichnet werden. Beispielsweise kann der dritte Lochquerschnitt in Form eines nach links weisenden Stiefels und/oder in Form eines Rechtecks mit einer eingebuchtete Ecke ausgebildet sein. Bevorzugt ist der dritte Lochquerschnitt dabei spiegelverkehrt und/oder an einer Achse gespiegelt zum zweiten Lochquerschnitt ausgebildet.

Bevorzugt weist jedes der Kühl-Durchgangslöcher 14a, 14b, 14c einen konkav-fünfeckförmigen Lochquerschnitt mit abgerundeten Ecken auf. Entsprechend kann der erste, zweite und dritte Lochquerschnitt jeweils in Form eines konkaven Fünfecks mit abgerundeten Ecken ausgebildet sein, wobei sich die jeweiligen Lochquerschnitte unterscheiden.

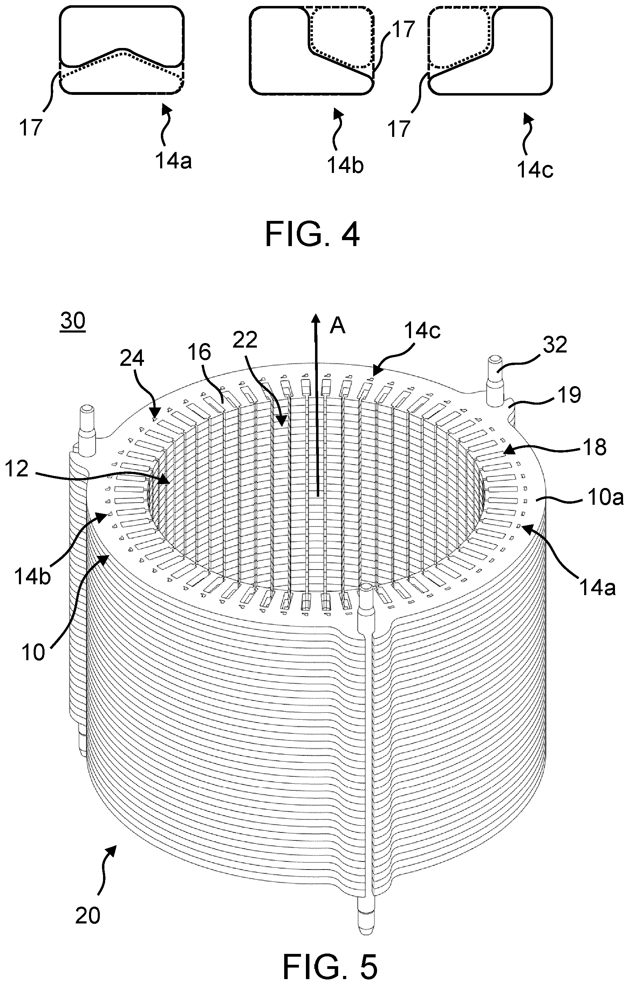

Weiterhin kann dem ersten, zweiten und dritten Lochquerschnitt jeweils ein gemeinsamer Grundquerschnitt 17 zugrunde liegen (vgl. Figur 4). Beispielsweise kann dem ersten, zweiten und dritten Lochquerschnitt ein gemeinsamer Grundquerschnitt 17 in Form eines Rechtecks mit abgerundeten Ecken zugrunde liegen. Der erste Lochquerschnitt des zumindest einen ersten Kühl-Durchgangslochs 14a kann sich dabei bspw. ausgehend von dem gemeinsamen Grundquerschnitt 17 dadurch ergeben, dass an einer der Längsseiten des Rechtecks ein dreieckiger Bereich, der bspw. durch die Längsseite und zwei halben Diagonalen des Rechtecks begrenzt wird, nicht mitausgenommen ist. Weiterhin kann sich der zweite Lochquerschnitt des zumindest einen zweiten Kühl-Durchgangslochs 14b bspw. ausgehend vom gemeinsamen Grundquerschnitt 17 dadurch ergeben, dass in einer Ecke des Rechtecks ein unregelmäßig viereckiger Bereich, der bspw. durch einen Teil der Längs- und Querseite des Rechtecks, einer halben Mittelsenkrechten und einer halben Diagonalen des Rechtecks begrenzt wird, nicht mitausgenommen ist. Der dritte Lochquerschnitt des zumindest einen dritten Kühl-Durchgangslochs 14c kann sich bspw. ausgehend von dem rechteckigen Grundquerschnitt 17 dadurch ergeben, dass der zweite Lochquerschnitt an einer Mittelsenkrechten des Rechtecks gespiegelt wird.

Bevorzugt weist das zumindest eine erste Kühl-Durchgangsloch 14a mehrere (z. B. zwanzig) erste Kühl-Durchgangslöcher 14a auf. Diese können bspw. gleichmäßig verteilt in einem ersten 120°-Kreisringsegment 15a um den Mittelpunkt M des jeweiligen Rotor-Durchgangslochs 12 angeordnet sein (vgl. Figur 3). Weiterhin kann auch das zumindest eine zweite Kühl-Durchgangsloch 14b mehrere (z. B. zwanzig) zweite Kühl-Durchgangslöcher 14b aufweisen. Diese können bspw. gleichmäßig verteilt in einem zweiten 120°-Kreisringsegment 15b um den Mittelpunkt M des jeweiligen Rotor-Durchgangslochs 12 angeordnet sein. Letztlich kann auch das zumindest eine dritte Kühl-Durchgangsloch 14c mehrere (z. B. zwanzig) dritte Kühl-Durchgangslöcher 14c aufweisen. Diese können bspw. gleichmäßig verteilt in einem dritten 120°-Kreisringsegment 15c um den Mittelpunkt M des jeweiligen Rotor-Durchgangslochs 12 angeordnet sein. Das erste, zweite und dritte 120°-Kreisringsegment 15a, 15b, 15c können einen gemeinsamen Radius aufweisen und/oder zusammen einen vollständigen Kreis um den Mittelpunkt M bilden.

In einer bevorzugten Ausführungsform weisen die Statorbleche 10 jeweils gleich viele erste, zweite und dritte Kühl-Durchgangslöcher 14a, 14b, 14c auf.

Die Statorbleche 10 können ferner zumindest eine Lasche 19 aufweisen (vgl. Figur 3). Die zumindest eine Lasche 19 kann zur Aufnahme zumindest eines stiftförmigen Halteelements 32 dienen. Die zumindest eine Lasche 19 kann an den Grundkörper 10a angeformt sein und/oder integral-einstückig mit dem Grundkörper 10a verbunden sein. Die Lasche 19 kann radial nach außen gerichtet sein und/oder radial nach außen vom Grundkörper 10a abragen. Bevorzugt ist die zumindest eine Lasche 19 geschlitzt und/oder zumindest abschnittsweise offen ausgebildet. Weiterhin kann die zumindest eine Lasche 19 mehrere (z. B. drei) Laschen 19 aufweisen. Die mehreren 19 können im Umfangsrichtung gleichverteilt am Statorblech 10 angeordnet sein. Beispielsweise können die mehreren 19 zueinander einen gleichen Abstand aufweisen und/oder jeweils zum Mittelpunkt M einen gleichen Abstand aufweisen.

Im Schritt S₂ erfolgt sodann ein Stapeln (z. B. Aufeinanderstapeln) der mehreren baugleichen Statorbleche 10 entlang einer Mittelachse A zu einem Satorblechpaket 20 (vgl. Figuren 2, 5, 6A und 6B). Bevorzugt erfolgt das Stapel hierbei derart, dass die Mittelpunkte M der Rotor-Durchgangslöcher 12 aller Statorbleche 10 auf der Mittelachse A liegen. Zudem oder alternativ kann das Stapel bevorzugt derart erfolgen, dass die Rotor-Durchgangslöcher 12, Statorzähne 16 und/oder Statornuten 18 der Statorbleche 10 zueinander fluchtend angeordnet sind.

Durch das Stapeln können die gestapelten Rotor-Durchgangslöcher 12 einen Aufnahmeraum 22 für den Rotor der elektrischen Maschine in dem Satorblechpaket 20 bilden. Wie bspw. in Figur 5 dargestellt, kann der Aufnahmeraum 22 für den Rotor bspw. zylinderförmig und/oder umfangsseitig geschlossen sein.

Ferner können gestapelten zumindest einen Laschen 19 zumindest eine gerade Durchgangsöffnung für zumindest ein Halteelement 32 (z. B. einen Spannbolzen) bilden. Beispielsweise kann das Satorblechpaket 20, wie bspw. in Figur 5 dargestellt, mittels des zumindest ein Halteelements 32 fixierbar und/oder verspannbar sein.

Weiterhin können durch das Stapeln die gestapelten Kühl-Durchgangslöcher 14a, 14b, 14c mehrere Kühlkanäle 24 in dem Satorblechpaket 20 bilden. Eine Anzahl der Kühlkanäle 24 kann dabei gleich der Anzahl an Kühl-Durchgangslöchern 14a, 14b, 14c und/oder gleich der Anzahl an Statornuten 18 jedes der Statorbleche 10 sein. Die mehreren Kühlkanäle 24 können konzentrisch um den Aufnahmeraum 22 herum angeordnet sein. Die mehreren Kühlkanäle 24 können sich im Wesentlichen parallel zur Mittelachse M erstrecken (vgl. Figur 5). Beispielsweise kann sich jeder der mehreren Kühlkanäle 24 von einer (z. B. senkrecht zur Mittelachse M orientierten) ersten (z. B. oberen) Endfläche des Statorblechpakets 20 zu einer (z. B. senkrecht zur Mittelachse M orientierten) zweiten (z. B. unteren) Endfläche des Statorblechpakets 20 durch das Satorblechpaket 20 erstrecken. Die mehreren Kühlkanäle 24 können das Satorblechpaket 20 somit vollständig durchdringen. Jeder der Kühlkanäle 24 kann für ein Durchströmen mit einem z. B. gasförmigen und/oder flüssigen) Kühlmittel ausgebildet sein. Beispielsweise können die Kühlkanäle 24 fluiddicht und/oder gasdicht ausgebildet sein.

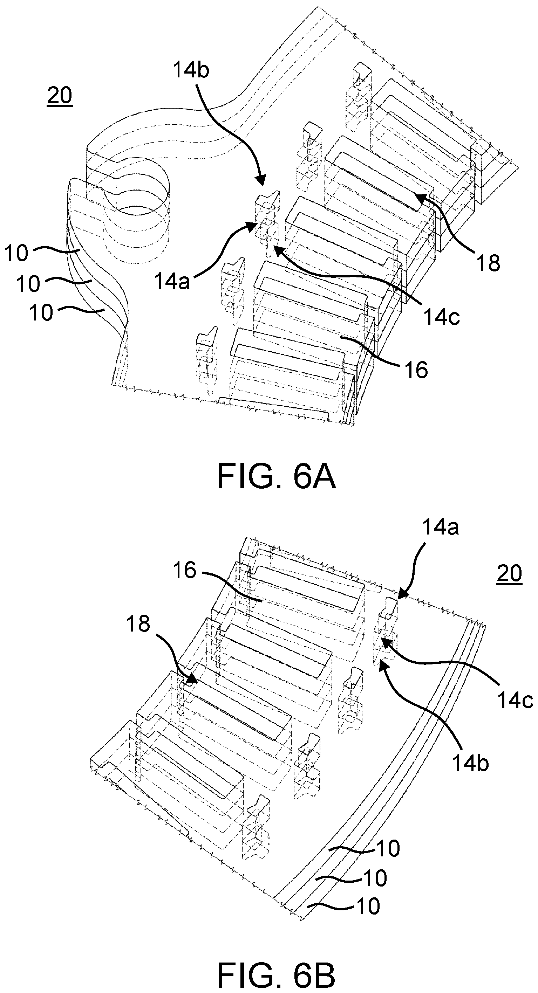

Bevorzugt werden die Statorbleche 10 nicht alle gleich orientiert gestapelt. Wie in Figur 6A und 6B dargestellt, weist das Stapeln bevorzugt ein gegeneinander Verdrehen von zumindest zwei der Statorbleche 10 um die Mittelachse und/oder ein Aneinanderfügen von zumindest zwei Statorblechen 10 derart, dass unterschiedlich ausgebildete Kühl-Durchgangslöcher 14a, 14b, 14c aneinandergrenzen.

Lediglich beispielhaft kann im Fall der gemäß Figur 4 ausgeführten Statorbleche 10 das Stapel ein Verdrehen von zumindest manchen der Statorbleche 10 um 120° um die Mittelachse umfassen. Bevorzugt erfolgt das Verdrehen allerdings regelmäßig, bspw. derart, dass an ein erstes Statorblech ein weiteres Statorblech um 120° im Uhrzeigersinn um die Mittelachse verdreht angefügt wird und anschließend ein nochmal weiteres um 120° gegen den Uhrzeigersinn um die Mittelachse verdreht an das weitere Statorblech angefügt wird. Entsprechend kann sich dadurch eine periodische Statorblech Abfolge aus unverdrehten, 120° im Uhrzeigersinn verdrehten und 120° gegen den Uhrzeigersinn verdrehten Statorblechen 10 ergeben.

Hierbei ist das Verdrehen allerdings nicht auf 120° Winkel beschränkt. Beispielsweise können andere Anordnung der unterschiedlich ausgebildeten Kühl-Durchgangslöchern 14a, 14b, 14c andere Drehwinkel bedingen. Weiterhin muss nicht zwingend zwischen zwei Statorblechen 10 zwingend eine Verdrehung vorliegen. Es ist ebenso möglich, dass abschnittsweise mehrere gleich orientierte Statorbleche 10 und/oder Teilstapel aus jeweils gleich orientierten Statorblechen 10 gestapelt werden.

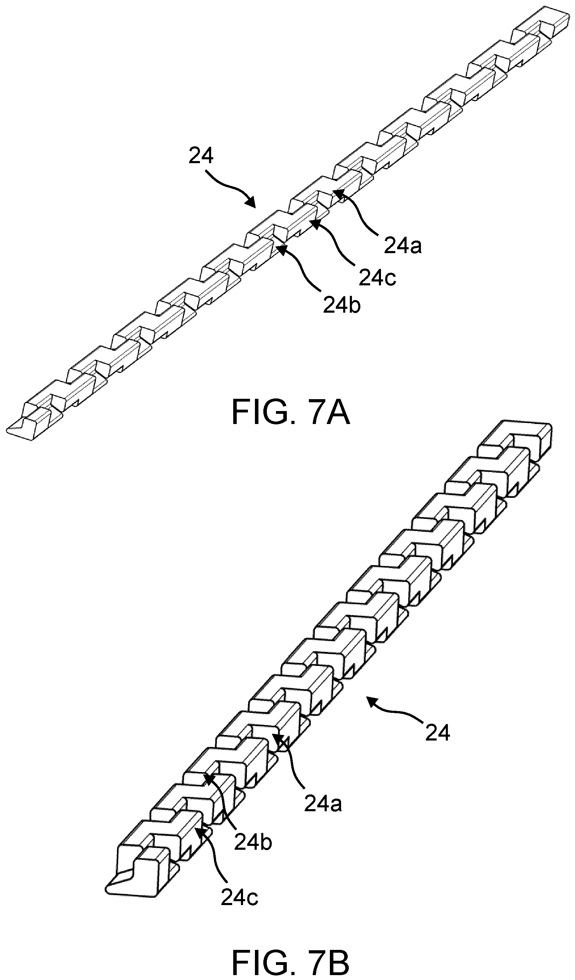

Wie bspw. in Figur ersichtlich weisen die Kühlkanäle 24 entlang ihrer jeweiligen Erstreckungsrichtung parallel zur Mittelachse A jeweils einen variierenden Kühlkanal- bzw. Strömungsquerschnitt auf. Wie durch die ausschließlich die Begrenzung eines einzelnen Kühlkanals 24 aus verschiedenen Perspektiven zeigenden Figuren 7A und 7B ersichtlich ist, können die Kühlkanäle 24 zudem oder alternativ entlang ihrer jeweiligen Erstreckungsrichtung (parallel zur Mittelachse A) jeweils mehrere (z. B. regelmäßige) Richtungsänderungen in Radial- und Umfangsrichtung aufweisen.

Beispielsweise können die Kühlkanäle 24 zumindest ein erstes Segment 24a aufweisen, das bevorzugt durch das zumindest eine erste Kühl-Durchgangsloch mit dem ersten Lochquerschnitt gebildet ist. Das zumindest eine erste Segment 24a kann sich bspw. vorrangig in Umfangsrichtung erstrecken und/oder für ein Leiten des Kühlmittels in Umfangsrichtung ausgebildet sein.

Ferner können die Kühlkanäle 24 zumindest ein zweites Segment 24b aufweisen, das bevorzugt durch das zumindest eine zweite Kühl-Durchgangsloch mit dem zweiten Lochquerschnitt gebildet ist. Das zumindest eine zweite Segment 24b kann sich bspw. vorrangig in Radialrichtung erstrecken und/oder für ein Leiten des Kühlmittels in Radialrichtung (z. B. bzgl. einer Kühlmittelströmung radial nach außen) ausgebildet sein.

Weiterhin können die Kühlkanäle 24 zumindest ein drittes Segment 24c aufweisen, das bevorzugt durch das zumindest eine dritte Kühl-Durchgangsloch mit dem dritten Lochquerschnitt gebildet ist. Das zumindest eine dritte Segment 24c kann sich bspw. vorrangig in Radialrichtung erstrecken und/oder für ein Leiten des Kühlmittels in Radialrichtung (z. B. bzgl. einer Kühlmittelströmung radial nach innen) ausgebildet sein.

Im Schritt S₃ erfolgt letztlich ein Fixieren des gestapelten Statorblechpakets 20 zur Ausbildung des Statorkerns (vgl. Figur 5). Dies kann bspw. mittels zumindest eines Halteelements 32 erfolgen, dass in den eigenführt wird. Zudem oder alternativ kann das Statorblechpakets 20 auch anderweitig form-, kraft- und/oder formschlüssig fixiert werden. Beispielsweise kann das Fixieren ein Verschweißen, Verschrauben, Verkleben, Verpressen und/oder Verbacken des gestapelten Statorblechpakets umfassen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbei spiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichen

- 10: Statorblech
- 10a: Grundkörper
- 12: Rotor-Durchgangsloch
- 14a: Erstes Kühl-Durchgangsloch
- 14b: Zweites Kühl-Durchgangsloch
- 14c: Drittes Kühl-Durchgangsloch
- 15a: Erstes 120°-Kreisringsegment
- 15b: Zweites 120°-Kreisringsegment
- 15c: Drittes 120°-Kreisringsegment
- 16: Statorzahn
- 17: Grundquerschnitt
- 18: Statornut
- 19: Lasche
- 20: Satorblechpaket
- 22: Aufnahmeraum
- 24: Kühlkanäle
- 24a: Erstes Segment
- 24b: Zweites Segment
- 24c: Drittes Segment
- 30: Statorkern
- 32: Halteelement
- A: Mittelachse
- M: Mittelpunk

## Patentansprüche

1. Verfahren zur Herstellung eines Statorkerns (30) für eine elektrische Maschine, vorzugsweise für einen Fahrzeugelektromotor, wobei das Verfahren aufweist:
- Bereitstellen mehrerer baugleicher, vorzugsweise ringförmiger, Statorbleche (10), die jeweils ein, vorzugsweise zentrales, Rotor-Durchgangsloch (12) und mehrere, vorzugsweise konzentrisch um das Rotor-Durchgangsloch (12) herum angeordnete, Kühl-Durchgangslöcher (14a, 14b, 14c) aufweisen;
- Stapeln der Statorbleche (10) entlang einer Mittelachse (A) zu einem Statorblechpaket (20), wobei die gestapelten Rotor-Durchgangslöcher (12) einen Aufnahmeraum (22) für einen Rotor der elektrischen Maschine und die gestapelten Kühl-Durchgangslöcher (14a, 14b, 14c) mehrere Kühlkanäle (24) in dem Statorblechpaket (20) bilden; und
- Fixieren des gestapelten Statorblechpakets (20), vorzugsweise mittels zumindest eines Halteelements (32), zur Ausbildung des Statorkerns (30);
**dadurch gekennzeichnet, dass** zumindest zwei, vorzugsweise zumindest drei, der Kühl-Durchgangslöcher (14a, 14b, 14c) jedes Statorblechs (10) unterschiedlich ausgebildet sind, vorzugsweise jeweils unterschiedliche Lochquerschnitte aufweisen.

2. Verfahren nach Anspruch 1, wobei die Kühl-Durchgangslöcher (14a, 14b, 14c) jedes Statorblechs (10) aufweisen:
zumindest ein symmetrisches Kühl-Durchgangsloch (14a), aufweisend einen achsensymmetrischen, vorzugsweise nierenförmigen, Lochquerschnitt; und/oder
zumindest ein asymmetrisches Kühl-Durchgangsloch (14b), aufweisend einen nicht achsensymmetrischen, vorzugsweise stiefelförmigen, Lochquerschnitt; und/oder
zumindest ein weiteres asymmetrisches Kühl-Durchgangsloch (14c), aufweisend einen weiteren nicht achsensymmetrischen, vorzugsweise stiefelförmigen, Lochquerschnitt, der vorzugsweise spiegelbildlich zum Lochquerschnitt des zumindest einen asymmetrischen Kühl-Durchgangslochs (14b) ausgebildet ist.

3. Verfahren nach Anspruch 2, wobei:
das zumindest eine symmetrische Kühl-Durchgangsloch (14a) mehrere symmetrische Kühl-Durchgangslöcher (14a) aufweist, die, vorzugsweise gleichmäßig verteilt, in einem ersten 120°-Kreisringsegment (15a) um einen Mittelpunkt (M) des jeweiligen Rotor-Durchgangslochs (12) angeordnet sind;
das zumindest eine asymmetrische Kühl-Durchgangsloch (14b) mehrere asymmetrische Kühl-Durchgangslöcher (14b) aufweist, die, vorzugsweise gleichmäßig verteilt, in einem zweiten 120°-Kreisringsegment (15b) um den Mittelpunkt (M) des Rotor-Durchgangslochs (12) angeordnet sind; und
das zumindest eine weitere asymmetrische Kühl-Durchgangsloch (14c) mehrere weitere asymmetrische Kühl-Durchgangslöcher (14c) aufweist, die, vorzugsweise gleichmäßig verteilt, in einem dritten 120°-Kreisringsegment (15c) um den Mittelpunkt (M) des Rotor-Durchgangslochs (12) angeordnet sind.

4. Verfahren nach einem der vorherigen Ansprüche, wobei:
die Kühl-Durchgangslöcher (14a, 14b, 14c) jedes Statorblechs (10) alle jeweils einen konkav-fünfeckförmigen Lochquerschnitt, vorzugsweise mit abgerundeten Ecken, aufweisen.

5. Verfahren nach einem der vorherigen Ansprüche, wobei der Schritt des Stapelns umfasst:
- Gegeneinander Verdrehen von zumindest zwei der Statorbleche (10), vorzugsweise um einen Winkel von 120°, um die Mittelachse (A), vorzugsweise derart, dass die Kühlkanäle (24) jeweils entlang einer jeweiligen Erstreckungsrichtung parallel zur Mittelachse (A) einen variierenden Kühlkanalquerschnitt aufweisen; und/oder
- Aneinanderfügen von zumindest zwei der Statorbleche (10) derart, dass unterschiedlich ausgebildete Kühl-Durchgangslöcher (14a, 14b, 14c) aneinandergrenzen, vorzugsweise sodass die Kühlkanäle (24) jeweils entlang einer jeweiligen Erstreckungsrichtung parallel zur Mittelachse (A) einen variierenden Kühlkanalquerschnitt aufweisen.

6. Verfahren nach einem der vorherigen Ansprüche, wobei der Schritt des Stapelns umfasst:
- Gruppieren der Statorbleche (10) in mehrere Teilstapel aus jeweils gleich orientierten Statorblechen (10); und
- Gegeneinander Verdrehen aneinandergrenzender Teilstapel, vorzugsweise um einen Winkel von 120°, um die Mittelachse (A); und/oder Aneinanderfügen der Teilstapel derart, dass Kühl-Durchgangslöcher (14a, 14b, 14c) mit verschiedene Lochquerschnitten aneinandergrenzen.

7. Verfahren nach einem der vorherigen Ansprüche, wobei die Statorbleche (10) jeweils aufweisen:
mehrere, vorzugsweise gleichmäßig verteilte, Statorzähne (16), die jeweils auf einen Mittelpunkt (M) des Rotor-Durchgangslochs (12) ausgerichtet sind; und
mehrere, vorzugsweise gleichmäßig verteilten, Statornuten (18) zur Aufnahme einer Statorwicklung, wobei die jeweiligen Statornuten (18) jeweils zwischen zwei benachbarten Statorzähnen (16) ausgebildet sind.

8. Verfahren nach Anspruch 7, wobei bei jedem der Statorbleche (10):
jeweils eine Anzahl von Kühl-Durchgangslöchern (14a, 14b, 14c) jeweils gleich einer Anzahl von Statornuten (18) ist; und/oder
jedes der Kühl-Durchgangslöcher (14a, 14b, 14c) jeweils radial nach außen versetzt und/oder radial fluchtend zu einer der jeweiligen Statornuten (18) angeordnet ist; und/oder
jedes der Kühl-Durchgangslöcher (14a, 14b, 14c) jeweils benachbart zu einem jeweiligen Nutgrund einer der jeweiligen Statornuten (18) angeordnet ist.

9. Verfahren nach einem der vorherigen Ansprüche, wobei:
die Statorbleche (10) jeweils im Wesentlichen ringförmig ausgebildet sind; und/oder
die Statorbleche (10) jeweils zumindest eine, vorzugsweise radial nach außen gerichtete, Lasche (19) zur Aufnahme eines, vorzugsweise stiftförmigen, Halteelements (32) aufweisen; und/oder
das Statorblechpaket (20) und/oder der Statorkern (30) ausschließlich baugleiche Statorbleche (10) umfasst; und/oder
der Aufnahmeraum (22) für den Rotor der elektrischen Maschine eine im Wesentlichen zylindrische Form aufweist.

10. Verfahren nach einem der vorherigen Ansprüche, wobei jeder der Kühlkanäle (24):
jeweils entlang einer jeweiligen Erstreckungsrichtung parallel zur Mittelachse (A) einen variierenden Kühlkanalquerschnitt aufweist; und/oder
jeweils entlang einer jeweiligen Erstreckungsrichtung parallel zur Mittelachse (A) jeweils mehrere Richtungsänderungen, vorzugsweise in Radialrichtung und Umfangsrichtung, aufweist; und/oder
das Statorblechpaket (20) vollständig durchdringt.

11. Statorkern (30) für eine elektrische Maschine, vorzugsweise hergestellt gemäß einem Verfahren nach einem der vorherigen Ansprüche, wobei der Statorkern (30) aufweist:
ein, vorzugsweise hohlzylinderförmiges, Statorblechpaket (20) aus mehreren entlang einer Mittelachse (A) gestapelten baugleichen Statorblechen (10), die vorzugsweise zumindest teilweise um die Mittelachse (A) herum gegeneinander verdreht sind;
wobei das Statorblechpaket (20) einen Aufnahmeraum (22) für einen Rotor der elektrischen Maschine und mehrere Kühlkanäle (24) aufweist;
**dadurch gekennzeichnet, dass** jeder der Kühlkanäle (24) jeweils entlang einer jeweiligen Erstreckungsrichtung parallel zur Mittelachse (A) einen variierenden Kühlkanalquerschnitt und/oder mehrere Richtungsänderungen, vorzugsweise in Radialrichtung und Umfangsrichtung, aufweist.

12. Statorkern (30) nach Anspruch 11, wobei jeder der Kühlkanäle (24):
jeweils entlang der jeweiligen Erstreckungsrichtung parallel zur Mittelachse (A) zumindest eine Richtungsänderung in Radialrichtung und zumindest eine Richtungsänderung in Umfangsrichtung, vorzugsweise eine periodische Abfolge aus Richtungsänderung in Radialrichtung und Umfangsrichtung, aufweist; und/oder
jeweils ausgebildet ist, einen jeweiligen Kühlmittelstrom auf einem im Wesentlichen schraubenförmigen und/oder korkenzieherförmigen Strömungspfad zu leiten; und/oder
jeweils entlang der jeweiligen Erstreckungsrichtung abschnittsweise einen achsensymmetrischen Kühlkanalquerschnitt und abschnittsweise einen nicht achsensymmetrischen Kühlkanalquerschnitt aufweist.

13. Elektrische Maschine für ein Kraftfahrzeug, vorzugsweise Nutzfahrzeug, wobei die elektrische Maschine aufweist:
einen Stator, aufweisend einen Statorkern (30) nach Anspruch 11 oder 12 und eine Statorwicklung, die am Statorkern (30) angebracht ist; und
einen Rotor, der im Aufnahmeraum (22) des Statorkerns (30) drehbar aufgenommen ist.

14. Kraftfahrzeug, vorzugsweise Nutzfahrzeug, aufweisend:
eine elektrische Maschine nach Anspruch 13; und/oder
einen Statorkern (30) nach Anspruch 11 oder 12.

15. Statorblech (10), aufweisend:
einen, vorzugsweise ringförmigen, Grundkörper (10a), der ein, vorzugsweise zentrales, Rotor-Durchgangsloch (12) aufweist;
mehrere Statorzähne (16), die jeweils einen, mit dem Grundkörper verbundenen Zahnfuß und einen, zum Zahnfuß entgegengesetzten Zahnkopf aufweisen, wobei die Zahnköpfe jeweils auf einen Mittelpunkt (M) des Rotor-Durchgangslochs (12) ausgerichtet sind;
mehrere Statornuten (18) zur Aufnahme einer Statorwicklung, wobei die Statornuten (18) jeweils zwischen zwei benachbarten Statorzähnen (16) ausgebidelt sind;
mehrere, vorzugweise konzentrisch um das Rotor-Durchgangsloch (12) herum angeordnete, Kühl-Durchgangslöcher (14a, 14b, 14c), die jeweils einer der Statornuten (18) zugeordnet und radial nach außen versetzt zu der jeweiligen Statornut (18) angeordnet sind;
wobei die Kühl-Durchgangslöcher (14a, 14b, 14c) aufweisen:
mehrere erste Kühl-Durchgangslöcher (14a) mit einem, vorzugsweise achsensymmetrischen, ersten Lochquerschnitt, wobei vorzugsweise die mehreren ersten Kühl-Durchgangslöcher (14a) in einem ersten 120°-Kreisringsegment (15a) um den Mittelpunkt (M) des Rotor-Durchgangslochs (12) angeordnet sind;
mehrere zweite Kühl-Durchgangslöcher (14b) mit einem, vorzugsweise nicht achsensymmetrischen, zweiten Lochquerschnitt, wobei vorzugsweise die mehreren zweiten Kühl-Durchgangslöcher (14b) in einem zweiten 120°-Kreisringsegment (15a) um den Mittelpunkt (M) des Rotor-Durchgangslochs (12) angeordnet sind; und
mehrere dritte Kühl-Durchgangslöcher (14c) mit einem, vorzugsweise weiteren nicht achsensymmetrischen, dritten Lochquerschnitt, wobei vorzugsweise die mehreren dritten Kühl-Durchgangslöcher (14c) in einem dritten 120°-Kreisringsegment (15a) um den Mittelpunkt (M) des Rotor-Durchgangslochs (12) angeordnet sind.
